# EUROPEAN PATENT SPECIFICATION

(11) **EP 1 571 559 B1**
(45) Date of publication and mention of the grant of the patent: **21.05.2008**
(21) Application number: 05101644.2
(22) Date of filing: 03.03.2005
(51) Int. Cl.: G06F 13/42, G06F 13/40

(54) **Bus system and access control method**
Bussystem und Zugangsteuerungsverfahren
Système de bus et procédé de contrôle d'accès

(30) Priority: 04.03.2004 JP 2004060172
(43) Date of publication of application: 07.09.2005
(73) Proprietor: NEC Electronics Corporation, Kawasaki, Kanagawa 211-8668 (JP)
(72) Inventor: Nariai, Kyoichi, Nakahara-ku, Kawasaki Kanagawa, 211-8668 (JP)
(74) Representative: Betten & Resch

(56) References cited:
- DE-A1- 10 222 584
- DE-U1- 29 521 444
- US-A- 4 797 853
- US-A1- 2003 172 214
- US-A1- 2003 200 451
- MAYHEW D ET AL: "PCI express and advanced switching: evolutionary path to building next generation interconnects" HIGH PERFORMANCE INTERCONNECTS, 2003. PROCEEDINGS. 11TH SYMPOSIUM ON 20-22 AUG 2003, PISCATAWAY, NJ, USA,IEEE, 20 August 2003 (2003-08-20), pages 21-29, XP010657970 ISBN: 0-7695-2012-X
- "Advanced Configuration and Power Interface Specification Rev 2.0 Excerpts (pp 21-26,211-230)" ADVANCED CONFIGURATION AND POWER INTERFACE SPECIFICATION, 27 July 2000 (2000-07-27), pages 1-27, XP002272933
- PATENT ABSTRACTS OF JAPAN vol. 018, no. 021 (P-1674), 13 January 1994 (1994-01-13) & JP 05 257516 A (OKUMA MACH WORKS LTD), 8 October 1993 (1993-10-08)

## Description

### BACKGROUND OF THE INVENTION

### 1. Field of the Invention

The present invention relates to a bus system connected to a plurality of masters and slaves, and an access control method.

### 2. Description of Related Art

In a bus system connected to a plurality of masters and slaves, it may be necessary in some cases to prevent a master different from a specific master from accessing a specific slave. For example, when confidential information or key information is stored in a given memory, the access to this memory from a processing unit such as CPU is permitted, but the access from other masters should be inhibited.

A technique for the access control is disclosed in Japanese Unexamined Patent Application Publication No. 05-257516. This technique places a master identification signal generation circuit for each of a plurality of masters, and further places a master identification circuit that identifies a master identification signal. A decoder generates a given control signal based on identification results, and informs the master that has made an access whether the access is valid or not. The technique controls input/output (I/O) with the generated control signal and informs the master that has made an access whether the access is valid or not, thereby preventing unauthorized access to a data I/O circuit.

According to the above technique, the data I/O circuit includes the master identification circuit and the decoder, and the decoder receives an access authorization signal output from the master identification circuit to determine whether the access should be permitted or not based on this signal. This configuration has the following disadvantages. Since the area where the access is controlled is determined by hardware, the area which can be controlled in the system is fixed to the data I/O circuit part having the master identification circuit. Further, it is impossible to control the access to only a part of the I/O of the data I/O circuit. Furthermore, since access protection is performed in the data I/O part, when a master accesses a protected part, transaction occurs in the system bus. Thus, if a master continuously accesses the data I/O circuit under access control by accident or on purpose, the performance of the system bus significantly decreases due to the transaction.

Recent mobile phones have become multifunctional, having not only telephone functions but also internet connection functions, camera functions and so on. Further, in order to realize downsizing, weight saving, and reduction in power consumption, System on Chip (SoC) technology which incorporates multiple functions on one chip has been developed.

Such mobile phones require high speed, simultaneous processing. Thus, a multilayer switch which allows simultaneous access to a plurality of slaves has been proposed.

Use of the multilayer switch permits to carry out a process of writing image data from a camera into a given memory region and a process of reading the image data stored in the memory and displaying it on a screen at the same time. In such a multilayer system as well, the same problems as in the above conventional technique can occur.

As described in the foregoing, the present invention has recognized that conventional bus systems have a problem that continuous access to a slave under access control causes significant deterioration of bus performance.

In US-A-2003/0172214, a data processing system with peripheral access protection is disclosed which comprises a combination of secure and unsecure bus masters needing to access shared peripherals. The data processing system allows for the dynamic update by a secure bus master of access permissions corresponding to each unsecure bus master for each peripheral. The secure bus master is therefore able to establish which unsecure bus masters have permission to access which peripheral in order to protect the data processing system from corruption due to errant or hostile software running on unsecure bus masters. Through the use of a bus master identifier, access to the requested peripheral is either allowed or denied based on the permissions established by the secure bus master.

In MAYHEW, D. ET AL: "PCI Express and Advanced Switching: Evolutionary Path to Building Next Generation Interconnects", 11th SYMPOSIUM on HIGH PERFORMANCE INTERCONNECTS (HOTI '03), IEEE Computer Society 2003, pages 21-29, ISBN: 0-7695-2012-X, PCI Express is described as providing an evolutionary approach allowing a smooth migration towards building a highly scalable next generation interconnect. It further provides advanced switching which boosts the capabilities of PCI Express by allowing a rich application space to be covered that includes multiprocessing and peer-to-peer communication.

In "ADVANCED CONFIGURATION AND POWER INTERFACE SPECIFICATION" of Compaq/lntel/Microsoft/Phoenix/Toshiba, revision 2.0, July 27, 2002, XP-002272933, inter alia, device power state definitions are provided which are generally not visible to the user. For example, some devices may be in the off state even though the system as whole is in the working state.

### SUMMARY OF THE INVENTION

According to the present invention, there are provided bus systems as defined in independent claims 1 and 5 and access control methods as defined in independent claims 9 and 13.

According to one aspect of the present invention, there is provided a bus system including a plurality of masters; a plurality of slaves; a multilayer switch disposed between the masters and the slaves, simultaneously processing commands from the plurality of masters, and having switch master portions corresponding to the masters and switch slave portions corresponding to the slaves; and an access control register to which access control information is set by a predetermined secure master. In this bus system, upon occurrence of an access from a master to a slave, a switch master portion corresponding to a master different from the secure master determines whether the access is made to an access control area based on address information of an access destination and access control information stored in the access control register, and if determining that the access is made to the access control area, inhibits the access. Since the switch master portion performs access control with reference to the access control register, even if a specific master repeatedly accesses a slave under access control, access to the switch slave portion and the slave does not occur, thereby preventing decrease in bus access performance of the master other than the specific master connected to the multilayer switch.

According to another aspect of the present invention, there is provided a bus system including a plurality of masters; a plurality of slaves; a system bus to which the masters and the slaves are connected; an arbiter setting authorization to use the system bus; an access control register to which access control information is set by a predetermined secure master; and a switch disposed between a master different from the secure master and the system bus. In this bus system, upon occurrence of an access from a master different from the secure master to the slave, the arbiter determines whether the access is made to an access control area based on address information of an access destination and access control information stored in the access control register, and if determining that the access is made to the access control area, inhibits the access with the switch. Since the arbiter performs access control with reference to the access control register using the switch between the connection point of the system bus and the master, even if a specific master repeatedly accesses a slave under access control, access to the system bus does not occur, thereby preventing decrease in system bus performance.

According to yet another aspect of the present invention, there is provided an access control method in a bus system including a plurality of masters, a plurality of slaves, and a multilayer switch disposed between the masters and the slaves and simultaneously processing commands from the plurality of masters. The method includes setting by a predetermined secure master access control information to an access control register; upon occurrence of an access from a master different from the secure master to a slave, comparing address information of an access destination with access control information set to the access control register and determining whether the access is made to an access control area; and upon determination that the access is made to the access control area, inhibiting the access by a switch master portion in the multilayer switch. Since the switch master portion performs access control with reference to the access control register, even if a specific master repeatedly accesses a slave under access control, access to the switch slave portion and the slave does not occur, thereby preventing decrease in bus access performance of the master other than the specific master connected to the multilayer switch.

According to still another aspect of the present invention, there is provided an access control method in a bus system including a plurality of masters, a plurality of slaves, a system bus to which the masters and the slaves are connected, and an arbiter setting authorization to use the system bus. The method includes setting by a predetermined secure master access control information to an access control register; upon occurrence of an access from a master different from the secure master to a slave, determining by the arbiter whether the access is made to an access control area based on address information of an access destination and access control information set to the access control register, and upon determination by the arbiter that the access is made to the access control area, inhibiting the access by a switch disposed between the masters and the system bus. Since the arbiter performs access control with reference to the access control register using the switch between the connection point of the system bus and the master, even if a specific master repeatedly accesses a slave under access control, access to the system bus does not occur, thereby preventing decrease in system bus performance.

The present invention provides a bus system and an access control method allowing optimal access control.

### BRIEF DESCRIPTION OF THE DRAWINGS

The above and other objects, advantages and features of the present invention will be more apparent from the following description taken in conjunction with the accompanying drawings, in which:
Fig. 1 is a block diagram of a bus system of the present invention;
Fig. 2 is a diagram showing a layout example of a chip using the bus system of the present invention and a circuit configuration example of elements related to power supply; and
Fig. 3 is a block diagram of another bus system of the present invention.

### DESCRIPTION OF THE PREFERRED EMBODIMENTS

The invention will be now described herein with reference to illustrative embodiments. Those skilled in the art will recognize that many alternative embodiments can be accomplished using the teachings of the present invention and that the invention is not limited to the embodiments illustrated for explanatory purposed.

### First Embodiment

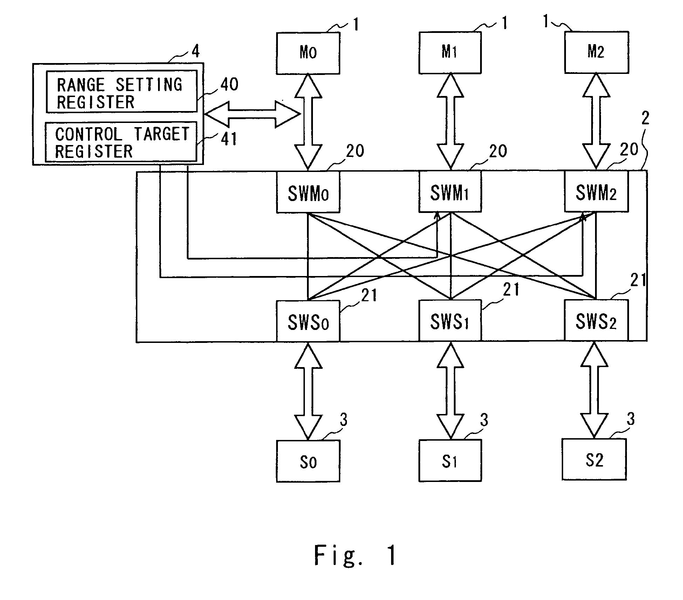

Fig. 1 shows a block diagram of a bus system of a first embodiment of the present invention. The bus system in this embodiment is a multilayer system. The multilayer system basically includes a plurality of masters 1 (M0, M1, M2), a plurality of slaves 3 (S0, S1, S2), and a multilayer switch 2 disposed between the masters 1 and the slaves 3. In this embodiment, the multilayer system further includes an access control register 4.

The master 1 is a module that controls the system, such as Central Processor Unit (CPU), Digital Signal Processor (DSP), image rotating device, camera image processing circuit, Liquid Crystal Display (LCD) controller, and so on. In this example, the M0 is a processing circuit such as CPU and DSP that always operate. The M1 and M2 are modules that operate as needed according to instructions from the M0.

The multilayer switch 2 allows simultaneous processing of commands from a plurality of masters. The multilayer switch 2 is an interconnection bus system that allows use of a parallel access path between a plurality of masters and slaves in the system. The bus system is realized by use of a more complex interconnection matrix and provides advantages such as increase in architecture options and in the entire bus bandwidth. The multilayer switch 2 is offered by ARM Ltd. as Advanced High-performance Bus (AHB), AHB-Lite®, for example.

The slave 3 is a module that is controlled by the master 1. For example, the slave 3 includes a memory, a register, a timer, a serial interface circuit, and so on.

The configuration of the multilayer switch 2 is described in detail below. The multilayer switch 2 has switch master portions 20 (SWMO, SWM1, SWM2) connected to each of the masters 1 (M0, M1, M2), and switch slave portions 21 (SWS0, SWS1, SWS2) connected to each of the slaves 3.

The switch master portion 20 has the function that determines which slave 3 is to be connected in response to the access from the master 1 based on address information specifying an access destination and sends an access request to the switch slave portion 21 corresponding to the slave 3 to be connected. Further, the switch master portion 20 in this embodiment has an address comparator circuit, though not shown. The address comparator circuit compares address information included in the access control information from the access control register 4 with address information included in the access from the master 1, and, if they match, controls the access to the slave specified by the address information.

The key function of the switch slave portion 21 is to arbitrate the access signals from each switch master portion 20, select one access and make a connection to the selected slave 3.

The access control register 4 includes a range setting register 40 and a control target register 41 to store access control information. The access control information includes control range information and control target information. The control range information specifies an access control area in the slave 3, and is stored in the range setting register 40. The control target information specifies for which master 1 the access control should be activated, and is stored in the control target register 41.

Information can be set to the range setting register 40 and the control target register 41 only by the M0, which is a secure master. Other masters such as the M1 and M2 cannot set the information. It is preferred to create a hardware configuration so as to allow the only M0, the secure master, to set information to the range setting register 40 and the control target register 41. Specifically, the secure master M0 is connected to a local bus, and the area where the master different from the M0 cannot access the address comparator circuit is created by default.

The range setting register 40 and the control target register 41 are connected to the SWM1 and SWM2 by signal lines. Specifically, the address comparator circuits included in the SWM1 and SWM2 are connected to the range setting register 40 and the control target register 41 by signal lines. Thus, detecting the voltage of these signal lines allows recognizing the address control information stored in the range setting register 40 and the control target register 41.

Now, the processing operation in the multilayer system of the first embodiment of the invention is described below. In this example, S2 is a memory that stores confidential information in the addresses 8000 to FFFF. Access is controlled to these addresses from the masters 1 other than the M0, which are M1 and M2 for example. The case where the M1 subject to access control tries to access the information stored in the address 8000, which is within the area of the addresses 8000 to FFFF of the S2, is described hereinafter.

The M1 outputs an address signal ("8000") of an access destination (the S2 in this case) and a control signal such as a read/write signal to the SWM1, which is the switch master portion 20 of the multilayer switch 2.

The SWM1 determines which slave 3 is to be accessed based on the address signal from the M1. Further, in the SWM1, the address comparator circuit compares address information included in the address signal from the M1 with address information included in the control range information set to the range setting register 40. Since the area of the addresses 8000 to FFFF is set to the range setting register 40 as an access control area in this case, the SWM1 operates with a recognition that the address 8000 where the M1 tries to access is within the control range. Thus, the SWM1 determines that the M1 makes an access to the access control area. In this case, the SWM1 does not transmit transaction to the SWS2 of the multilayer switch 2, but sends an error response to the M1 to inhibit the access to the access control area.

As described above, the switch master portion 20 performs access control with reference to the access control register 4 in this embodiment. Thus, even if a specific master repeatedly accesses the slave under access control, the access to the switch slave portion 21 and the slave 3 does not occur, thereby preventing decrease in the bus access performance of the master different from the specific master connected to the multilayer switch 2.

Further, in this embodiment, the access control area may be set to a given area of the system memory map. This embodiment also allows setting which master is inhibited to access the set area.

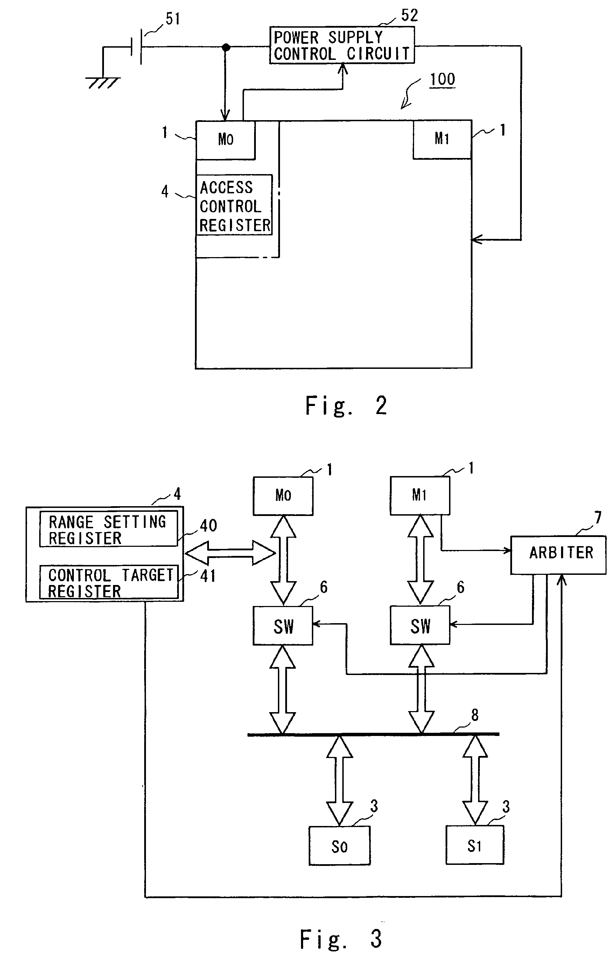

It is preferred to perform a different power supply control from other circuits or the like for the M0, which is the secure master in this embodiment, and the access control register 4. Fig. 2 shows a layout example of a chip 100 and a circuit configuration example of elements related to power supply. As shown in Fig. 2, power is constantly supplied to the M0 and the access control register 4 from a power supply 51. On the other hand, power is supplied to the other circuits including the M1 via a power supply control circuit 52. The power supply control circuit 52 operates in accordance with the control by the M0, and it stops power supply to each master 1, slave 3, and so on when not needed. This achieves power saving in the chip 100.

Even when the other circuits such as the M1 are turned off by the power supply control circuit 52, the access control register 4 is on, and thus the data set to the access control register 4 is not erased. Second Embodiment

A second embodiment of the present invention uses a normal bus, not a multilayer system. Fig. 3 shows the configuration of a bus system according to the second embodiment. A switch 6 is placed between the connection point of a system bus 8 and a master 1. The address of an access destination of M1 is input to an arbiter 7. Access control information stored in the range setting register 40 and the control target register 41 is also input to the arbiter 7. The access control information can be set to the access control register 4 only by the M0, which is a secure master. The arbiter 7 has a function to set authorization to use the system bus 8 by the master 1.

The processing operation in the bus system of the second embodiment is described below. The M1 outputs the address signal of an access destination to the arbiter 7. The arbiter 7 compares address information included in this address signal with address information included in access control information stored in the access control register 4, and outputs a comparison result. In this example, the arbiter 7 determines that the M1 makes an access to the set access control area. In this case, the arbiter 7 requests the switch 6 between the M1 and the connection point of the system bus 8 to prevent the access from the M1 to the system bus 8. In response to this request, the switch 6 sends an error response signal indicating that the access is inhibited to the master. This prevents the M1 from accessing the access control area.

As described above, the arbiter 7 performs access control with reference to the access control register 4 using the switch 6 placed between the connection point of the system bus 8 and the master 1 in this embodiment. Thus, even if a specific master repeatedly accesses the slave under the access control, the access to the system bus 8 does not occur, thereby preventing decrease in the system bus performance.

Further, in this embodiment, the access control area may be set to a given area of the system memory map. This embodiment also allows setting which master is inhibited to access the set area.

It is apparent that the present invention is not limited to the above embodiment that may be modified and changed without departing from the scope of the invention.

According to an embodiment, the bus system includes a plurality of masters, a plurality of slaves, and a multilayer switch. The bus system further includes an access control register to which access control information is set by a predetermined secure master. The multilayer switch includes switch master portions and switch slave portions. When a master accesses a slave, a switch master portion corresponding to a master different from the secure master determines whether the access is made to an access control area based on address information of an access destination and access control information stored in the access control register. If the switch master portion determines that the access is made to the access control area, it inhibits the access.

## Claims

1. A bus system comprising:
a plurality of masters (1);
a plurality of slaves (3);
a multilayer switch (2) disposed between the masters and the slaves, simultaneously processing commands from the plurality of masters, and comprising switch master portions (20) corresponding to the masters and switch slave portions (21) corresponding to the slaves; and
an access control register (4) to which access control information is set by a predetermined secure master;
wherein, upon occurrence of an access from a master to a slave, a switch master portion corresponding to a master different from the secure master determines whether the access is made to an access control area based on address information of an access destination and access control information stored in the access control register, and if determining that the access is made to the access control area, inhibits the access.

2. The bus system of claim 1, wherein power is constantly supplied to the secure master and the access control register.

3. The bus system of claim 2, wherein power supply to the master different from the secure master and/or the slave is controlled by the secure master.

4. The bus system of one of claims 1 to 3, wherein the access control register comprises a range setting register (40) storing range setting information setting an access control area, and a control target register (41) storing control target information specifying a master to be controlled.

5. A bus system comprising:
a plurality of masters (1);
a plurality of slaves (3);
a system bus (8) to which the masters and the slaves are connected;
an arbiter (7) setting authorization to use the system bus;
an access control register (4) to which access control information is set by a predetermined secure master; and
a switch (6) disposed between a master different from the secure master and the system bus,
wherein, upon occurrence of an access from a master different from the secure master to the slave, the arbiter determines whether the access is made to an access control area based on address information of an access destination and access control information stored in the access control register, and if determining that the access is made to the access control area, said switch prevents the master making the access from accessing to the system bus.

6. The bus system of claim 5, wherein power is constantly supplied to the secure master and the access control register.

7. The bus system of claim 6, wherein power supply to the master different from the secure master and/or the slave is controlled by the secure master.

8. The bus system of one of claims 5 to 7, wherein the access control register comprises a range setting register (40) storing range setting information setting an access control area, and a control target register (41) storing control target information specifying a master to be controlled.

9. An access control method in a bus system including a plurality of masters (1), a plurality of slaves (3), and a multilayer switch (2) disposed between the masters and the slaves and simultaneously processing commands from the plurality of masters, said multilayer switch having switch master portions (20) corresponding to the masters and switch slave portions (21) corresponding to the slaves, the method comprising:
setting by a predetermined secure master access control information to an access control register (4);
upon occurrence of an access from a master different from the secure master to a slave, comparing address information of an access destination with access control information set to the access control register and determining whether the access is made to an access control area; and
upon determination that the access is made to the access control area, inhibiting the access by said switch master portion corresponding to the master making the access.

10. The access control method of claim 9, wherein power is constantly supplied to the secure master and the access control register.

11. The access control method of claim 10, wherein power supply to the master different from the secure master and/or the slave is controlled by the secure master.

12. The access control method of one of claims 9 to 11, wherein the access control register comprises a range setting register (40) storing range setting information setting an access control area, and a control target register (41) storing control target information specifying a master to be controlled.

13. An access control method in a bus system including a plurality of masters (1), a plurality of slaves (3), a system bus (8) to which the masters and the slaves are connected, and an arbiter (7) setting authorization to use the system bus, the method comprising:
setting by a predetermined secure master access control information to an access control register;
upon occurrence of an access from a master different from the secure master to a slave, determining by the arbiter whether the access is made to an access control area based on address information of an access destination and access control information set to the access control register, and
upon determination by the arbiter that the access is made to the access control area, preventing the master making the access from accessing to the system bus by a switch (6) disposed between the masters and the system bus.

14. The access control method of claim 13, wherein power is constantly supplied to the secure master and the access control register.

15. The access control method of claim 14, wherein power supply to the master different from the secure master and/or the slave is controlled by the secure master.

16. The access control method of one of claims 13 to 15, wherein the access control register comprises a range setting register (40) storing range setting information setting an access control area, and a control target register (41) storing control target information specifying a master to be controlled.

## Patentansprüche

1. Bussystem, das Folgendes aufweist:
eine Vielzahl von Hauptrechnern (1);
eine Vielzahl von Nebenrechnern (3);
einen zwischen den Hauptrechnern und den Nebenrechnern angeordneten mehrschichtigen Schalter (2), der Befehle von der Vielzahl von Hauptrechnern gleichzeitig verarbeitet und der Schalter-Hauptrechnerabschnitte (20) entsprechend den Hauptrechnern und Schalter-Nebenrechnerabschnitte (21) entsprechend den Nebenrechnern aufweist; und
ein Zugriffsbefehlsregister (4), zu dem durch einen vorbestimmten sicheren Hauptrechner Zugriffssteuerinformation eingestellt wird;
wobei auf ein Auftreten eines Zugriffs von einem Hauptrechner auf einen Nebenrechner hin ein Schalter-Hauptrechnerabschnitt entsprechend einem vom sicheren Hauptrechner unterschiedlichen Hauptrechner basierend auf Adresseninformation eines Zugriffszielorts und im Zugriffssteuerregister gespeicherter Zugriffssteuerinformation bestimmt, ob der Zugriff auf einen Zugriffssteuerbereich durchgeführt wird, und dann, wenn er bestimmt, dass der Zugriff auf den Zugriffssteuerbereich durchgeführt wird, den Zugriff verhindert.

2. Bussystem nach Anspruch 1, wobei dem sicheren Hauptrechner und dem Zugriffssteuerregister konstant Strom zugeführt wird.

3. Bussystem nach Anspruch 2, wobei eine Stromversorgung zu dem vom sicheren Hauptrechner unterschiedlichen Hauptrechner und/oder dem Nebenrechner durch den sicheren Hauptrechner gesteuert wird.

4. Bussystem nach einem der Ansprüche 1 bis 3, wobei das Zugriffssteuerregister ein Reichweiteeinstellregister (40), das Reichweiteeinstellinformation speichert, die einen Zugriffssteuerbereich einstellt, und ein Steuerzielregister (41), das Steuerzielinformation speichert, die einen zu steuernden Hauptrechner spezifiziert, aufweist.

5. Bussystem, das Folgendes aufweist:
eine Vielzahl von Hauptrechnern (1);
eine Vielzahl von Nebenrechnern (3);
einen Systembus (8), mit dem die Hauptrechner und die Nebenrechner verbunden sind;
einen Zuteiler (7), der eine Berechtigung zum Verwenden des Systembusses einstellt;
ein Zugriffssteuerregister (4), zu dem Zugriffssteuerinformation durch einen vorbestimmten sicheren Hauptrechner eingestellt wird; und
einen Schalter (6), der zwischen einem vom sicheren Hauptrechner unterschiedlichen Hauptrechner und dem Systembus angeordnet ist,
wobei auf ein Auftreten eines Zugriffs von einem vom sicheren Hauptrechner unterschiedlichen Hauptrechner auf den Nebenrechner hin der Zuteiler basierend auf Adresseninformation eines Zugriffszielorts und auf im Zugriffssteuerregister gespeicherter Zugriffssteuerinformation bestimmt, ob der Zugriff auf einen Zugriffssteuerbereich durchgeführt wird, und dann, wenn er bestimmt, dass der Zugriff auf den Zugriffssteuerbereich durchgeführt wird, der Schalter den Hauptrechner, der den Zugriff durchführt, von einem Zugreifen auf den Systembus abhält.

6. Bussystem nach Anspruch 5, wobei dem sicheren Hauptrechner und dem Zugriffssteuerregister konstant Strom zugeführt wird.

7. Bussystem nach Anspruch 6, wobei eine Stromversorgung zu dem vom sicheren Hauptrechner unterschiedlichen Hauptrechner und/oder dem Nebenrechner durch den sicheren Hauptrechner gesteuert wird.

8. Bussystem nach einem der Ansprüche 5 bis 7, wobei das Zugriffssteuerregister ein Reichweiteeinstellregister (40), das Reichweiteeinstellinformation speichert, die einen Zugriffssteuerbereich einstellt, und ein Steuerzielregister (41), das Steuerzielinformation speichert, die einen zu steuernden Hauptrechner spezifiziert, aufweist.

9. Zugriffssteuerverfahren in einem Bussystem mit einer Vielzahl von Hauptrechnern (1), einer Vielzahl von Nebenrechnern (3) und einem mehrschichtigen Schalter (2), der zwischen den Hauptrechnern und den Nebenrechnern angeordnet ist und Befehle von der Vielzahl von Hauptrechnern gleichzeitig verarbeitet, wobei der mehrschichtige Schalter Schalter-Hauptrechnerabschnitte (20) entsprechend den Hauptrechnern und Schalter-Nebenrechnerabschnitte (21) entsprechend den Nebenrechnern hat, wobei das Verfahren Folgendes aufweist:
Einstellen von Zugriffssteuerinformation zu einem Zugriffssteuerregister (4) durch einen vorbestimmten sicheren Hauptrechner;
auf ein Auftreten eines Zugriffs von einem vom sicheren Hauptrechner unterschiedlichen Hauptrechner auf einen Nebenrechner hin, Vergleichen von Adresseninformation eines Zugriffszielorts mit zum Zugriffsteuerregister eingestellter Zugriffssteuerinformation und Bestimmen, ob der Zugriff auf einen Zugriffssteuerbereich durchgeführt wird; und
auf eine Bestimmung hin, dass der Zugriff auf den Zugriffssteuerbereich durchgeführt wird, Verhindern des Zugriffs durch den Schalter-Hauptrechnerabschnitt entsprechend dem Hauptrechner, der den Zugriff durchführt.

10. Zugriffssteuerverfahren nach Anspruch 9, wobei dem sicheren Hauptrechner und dem Zugriffsbefehlsregister konstant Strom zugeführt wird.

11. Zugriffssteuerverfahren nach Anspruch 10, wobei eine Stromversorgung zu dem vom sicheren Hauptrechner unterschiedlichen Hauptrechner und/oder dem Nebenrechner durch den sicheren Hauptrechner gesteuert wird.

12. Zugriffssteuerverfahren nach einem der Ansprüche 9 bis 11, wobei das Zugriffssteuerregister ein Reichweiteeinstellregister (40), das Reichweiteeinstellinformation speichert, die einen Zugriffssteuerbereich einstellt, und ein Steuerzielregister (41), das Steuerzielinformation speichert, die einen zu steuernden Hauptrechner spezifiziert, aufweist.

13. Zugriffssteuerverfahren in einem Bussystem mit einer Vielzahl von Hauptrechnern (1), einer Vielzahl von Nebenrechnern (3), einem Systembus (8), mit dem die Hauptrechner und die Nebenrechner verbunden sind, und einem Zuteiler (7), der eine Berechtigung zum Verwenden des Bussystems einstellt, wobei das Verfahren Folgendes aufweist:
Einstellen von Zugriffssteuerinformation zu einem Zugriffssteuerregister durch einen vorbestimmten sicheren Hauptrechner;
auf ein Auftreten eines Zugriffs von einem vom sicheren Hauptrechner unterschiedlichen Hauptrechner auf einen Nebenrechner hin, Bestimmen, ob der Zugriff auf einen Zugriffssteuerbereich durchgeführt wird, durch den Zuteiler basierend auf Adresseninformation eines Zugriffszielorts und auf zum Zugriffssteuerregister eingestellter Zugriffssteuerinformation, und
auf eine Bestimmung, dass der Zugriff auf den Zugriffssteuerbereich durchgeführt wird, durch den Zuteiler hin Abhalten des Hautrechners, der den Zugriff durchführt, von einem Zugreifen auf den Systembus durch einen zwischen den Hauptrechnern und dem Systembus angeordneten Schalter (6).

14. Zugriffssteuerverfahren nach Anspruch 13, wobei dem sicheren Hauptrechner und dem Zugriffsbefehlsregister konstant Strom zugeführt wird.

15. Zugriffssteuerverfahren nach Anspruch 14, wobei eine Stromversorgung zu dem vom sicheren Hauptrechner unterschiedlichen Hauptrechner und/oder dem Nebenrechner durch den sicheren Hauptrechner gesteuert wird.

16. Zugriffssteuerverfahren nach einem der Ansprüche 13 bis 15, wobei das Zugriffssteuerregister ein Reichweiteeinstellregister (40), das Reichweiteeinstellinformation speichert, die einen Zugriffssteuerbereich einstellt, und ein Steuerzielregister (41), das Steuerzielinformation speichert, die einen zu steuernden Hauptrechner spezifiziert, aufweist.

## Revendications

1. Système de bus comprenant :
une pluralité de maîtres (1) ;
une pluralité d'esclaves (3) ;
un commutateur multicouche (2) disposé entre les maîtres et les esclaves, traitant simultanément des commandes provenant de la pluralité de maîtres, et comprenant des parties maîtres de commutation (20) correspondant aux maîtres et parties esclaves de commutation (21) correspondant aux esclaves ; et
un registre de commande d'accès (4) dont les informations de commande d'accès sont définies par un maître de sécurité prédéterminé ;
dans lequel, lors de l'apparition d'un accès d'un maître à un esclave, une partie maître de commutation correspondant à un maître différent du maître de sécurité détermine si l'accès est fait à une zone de commande d'accès sur la base d'informations d'adresse d'une destination d'accès et d'informations de commande d'accès stockées dans le registre de commande d'accès, et s'il est déterminé que l'accès est fait à la zone de commande d'accès, bloque l'accès.

2. Système de bus selon la revendication 1, dans lequel une alimentation électrique est constamment fournie au maître de sécurité et au registre de commande d'accès.

3. Système de bus selon la revendication 2, dans lequel l'alimentation électrique au maître différent du maître de sécurité ét/ou à 1'esclave est commandée par le maître de sécurité.

4. Système de bus selon une des revendications 1 à 3, dans lequel le registre de commande d'accès comprend un registre de définition de plage (40), stockant des informations de définition de plage définissant une zone de commande d'accès, et un registre de cible de commande (41) stockant des informations de cible de commande spécifiant un maître devant être commandé.

5. Système de bus comprenant :
une pluralité de maîtres (1) ;
une pluralité d'esclaves (3) ;
un bus système (8) auquel les maîtres et les esclaves sont connectés ;
un arbitre (7) décidant de l'autorisation d'utiliser le bus système ;
un registre de commande d'accès (4) auquel des informations de commande d'accès sont définies par un maître de sécurité prédéfini ; et
un commutateur (6) disposé entre un maître, différent du maître de sécurité, et le bus système,
dans lequel, lors de l'apparition d'un accès d'un maître, différent du maître de sécurité, à l'esclave, l'arbitre détermine si l'accès est fait à une zone de commande d'accès sur la base d'informations d'adresse d'une destination d'accès et d'informations de commande d'accès stockées dans le registre de commande d'accès, et s'il est déterminé que l'accès est fait à la zone de commande d'accès, ledit commutateur empêche le maître faisant l'accès d'accéder au bus système.

6. Système de bus selon la revendication 5, dans lequel une alimentation électrique est constamment fournie au maître de sécurité et au registre de commande d'accès.

7. Système de bus selon la revendication 6, dans lequel l'alimentation électrique au maître différent du maître de sécurité et/ou à l'esclave est commandée par le maître de sécurité.

8. Système de bus selon une des revendications 5 à 7, dans lequel le registre de commande d'accès comprend un registre de définition de plage (40) stockant des informations de définition de plage définissant une zone de commande d'accès, et un registre de cible de commande (41) stockant des informations de cible de commande spécifiant un maître devant être commandé.

9. Procédé de commande d'accès dans un système de bus comportant une pluralité de maîtres (1), une pluralité d'esclaves (3) et un commutateur multicouche (2) disposé entre les maîtres et les esclaves et traitant simultanément des commandes provenant de la pluralité de maîtres, ledit commutateur multicouche ayant des parties maîtres de commutation (20) correspondant aux maîtres et des parties esclaves de commutation (21) correspondant aux esclaves, le procédé comprenant les étapes consistant à :
définir par un maître de sécurité prédéterminé des informations de commande d'accès pour un registre de commande d'accès (4) ;
lors de l'apparition d'un accès provenant d'un maître, différent du maître de sécurité, à un esclave, comparer des informations d'adresse d'une destination d'accès à des informations de commande d'accès définies dans le registre de commande d'accès et déterminer si l'accès est fait vers une zone de commande d'accès ; et
lors de la détermination du fait que l'accès est fait à la zone de commande d'accès, empêcher l'accès par ladite partie maître de commutation au maître faisant l'accès.

10. Procédé de commande d'accès selon la revendication 9, dans lequel une alimentation électrique est constamment fournie au maître de sécurité et au registre de commande d'accès.

11. Procédé de commande d'accès selon la revendication 10, dans lequel l'alimentation électrique au maître différent du maître de sécurité et / ou à l'esclave est commandée par le maître de sécurité.

12. Procédé de commande d'accès selon une des revendications 9 à 11, dans lequel le registre de commande d'accès comprend un registre de définition de plage (40), stockant des informations de définition de plage définissant une zone de commande d'accès, et un registre de cible de commande (41) stockant des informations de cible de commande spécifiant un maître devant être commandé.

13. Procédé de commande d'accès dans un système de bus comportant une pluralité de maîtres (1), une pluralité d'esclaves (3), un bus système (8) auquel les maîtres et les esclaves sont connectés, et un arbitre (7) décidant de l'autorisation d'utiliser le bus système, le procédé comprenant les étapes consistant à :
définir par un maître de sécurité prédéterminé des informations de commande d'accès pour un registre de commande d'accès ;
lors de l'apparition d'un accès provenant d'un maître, différent du maître de sécurité, à un esclave, déterminer par l'arbitre si l'accès est fait à une zone de commande d'accès sur la base des informations d'adresse d'une destination d'accès et des informations de commande d'accès définies pour le registre de commande d'accès, et
lors de la détermination par l'arbitre que l'accès est fait à la zone de commande d'accès, empêcher le maître faisant l'accès d'accéder au bus système par un commutateur (6) disposé entre les maîtres et le bus système.

14. Procédé de commande d'accès selon la revendication 13, dans lequel une alimentation électrique est constamment fournie au maître de sécurité et au registre de commande d'accès.

15. Procédé de commande d'accès selon la revendication 14, dans lequel l'alimentation électrique au maître différent du maître de sécurité et / ou à l'esclave est commandée par le maître de sécurité.

16. Procédé de commande d'accès selon une des revendications 13 à 15, dans lequel le registre de commande d'accès comprend un registre de définition de plage (40), stockant des informations de définition de plage définissant une zone de commande d'accès, et un registre de cible de commande (41) stockant des informations de cible de commande spécifiant un maître devant être commandé.
